# EUROPEAN PATENT SPECIFICATION

(11) **EP 0 537 783 B1**
(45) Date of publication and mention of the grant of the patent: **28.06.1995**
(21) Application number: 92117757.2
(22) Date of filing: 16.10.1992
(51) Int. Cl.: A01N 25/18

(54) **Method for disruption of mating of pest insects using sustained-release sex pheromone dispenser**
Verfahren zur Unterbrechung der Paarung von Schädlingsinsekten unter Verwendung eines Sexualpheromon-Spenders mit anhaltender Wirkstoffreigabe
Méthode d'interruption d'accouplement des insectes nuisibles utilisant un distributeur à libération lente de phéromones sexuelles

(30) Priority: 16.10.1991 JP 296482/91
(43) Date of publication of application: 21.04.1993
(73) Proprietor: Shin-Etsu Chemical Co., Ltd., Chiyoda-ku Tokyo 100 (JP)
(72) Inventor: Saguchi, Ryuichi, Joetsu-shi, Niigata-ken (JP); Ogawa, Kinya, Kawasaki-shi, Kanagawa-ken (JP); Yamamoto, Akira, Joetsu-shi, Niigata-ken (JP)
(74) Representative: Jaeger, Klaus, Dr.

(56) References cited:
- DE-A- 2 140 308
- US-A- 4 492 644
- JOURNAL OF ECONOMIC ENTOMOLOGY vol. 81, no. 3, June 1988, COLLEGE PARK, MARYLAND US pages 937 - 943 B.A.LEONHARDT ET AL. 'Laboratory and Field Evaluation of Controlled Release Dispensers Containing Grandlure, the Pheromone of the Boll Weevil (Coleoptera: Curculionidae)'
- PATENT ABSTRACTS OF JAPAN vol. 12, no. 143 (C-492)(2990) 30 April 1988
- PATENT ABSTRACTS OF JAPAN vol. 12, no. 47 (C-475)(2894) 12 February 1988

## Description

### BACKGROUND OF THE INVENTION

The present invention relates to a method for the elimination of pest insects by means of a sex pheromone compound which, when contained in an extremely low concentration in the atmospheric air, can disturb the intercommunication between different sexes of the insects so as to disrupt mating of them.

As one of the methods for the elimination of pest insects from agricultural fields, the method by the utilization of a sex pheromone compound of the specific insect species is highlighted in recent years, in which the synthetically prepared sex pheromone compound, referred to simply as pheromone hereinafter, is released to the atmosphere of the field and contained in the air so that the male of the insect is disturbed from recognition of the female to mate which releases the same pheromone compound to attract the male. This method of mating disruption is highlighted because the method is absolutely free from the problem of environmental pollution which is unavoidable in the use of a large quantity of insecticide compounds having toxicity not only to the pests but also to the human body.

Since development of pest insects is repeated several times during the seasons beginning with spring and ending in autumn in the year, the method of pest elimination by use of a pheromone is usually undertaken by distributing a large number of pheromone dispensers in the field during the period in which the adult insects of the first generation develop so as to release the pheromone compound sustainedly through the summer to autumn.

Various attempts and proposals have been heretofore made in order to improve such pheromone dispensers relative to the sustained releasability of the pheromone. Following are some of the examples of those improved pheromone dispensers as proposed.

U.S. Patent No. 4,017,030 proposes a pheromone dispenser of a type in which the pheromone compound is contained in a capillary tube closed at one end and open at the other end and the pheromone is sustainedly released into the atmosphere out of the open end. The pheromone dispensers of this type, however, are not suitable for practical use because the amount of the pheromone compound contained in a single dispenser tube is usually very small so that the dispenser has a limited life for sustainedly releasing the pheromone.

Pheromone dispensers of a second type include those proposed in U.S. Patent No. 4,160,335 in which a carrier layer of a polymer admixed with the pheromone is laminated with a layer of a polymer as a releasing-controlling layer to form a laminated body and those proposed in Japanese Patent Kokai No. 59-13701 and No. 59-59734 and U.S. Patent No. 4,445,641 in which a porous body impregnated with a pheromone is coated with a coating layer of polyethylene and the like to control the permeating rate of the pheromone therethrough. These pheromone dispensers have a defect in common that a considerably large portion of the pheromone initially contained in the dispenser remains as unreleased even after expiration of the life of the dispenser.

As the pheromone dispensers of a third type, U.S. Patents No. 2,800,457, No. 5,800,458 and No. 3,577,515 propose microcapsules in which a pheromone compound is encapsulated. These pheromone-containing microcapsules, however, are far from practicality because the cost for the preparation of microcapsules is high and a considerably large portion of the expensive pheromone compound is lost in the course of the preparation of the microcapsules in addition to the defect that the rate of pheromone release is usually too large due to the large surface area of microcapsules so that the serviceable life of the pheromone dispensers of the microcapsule type cannot be long enough.

The pheromone dispensers of a fourth type are proposed in Japanese Patent Kokai No. 62-195303 and elsewhere in which a pheromone is contained in a container in the form of a capillary tube or ampule made from a uniform simple layer of a polymer film. In particular, the polymeric film material may have a specific equilibrium swelling ratio with the pheromone compound.

The container of the fourth-type pheromone dispensers is usually made from a polyolefin film of a relatively large thickness which ensures good sustained releasability of the pheromone to impart the dispenser with a long serviceable life. On the other hand, such a pheromone container causes following problems because the pheromone must permeate through the wall of the container so that the rate of pheromone release to the atmosphere largely depends on the temperature.

When the pheromone dispenser is to be used throughout the year, namely, a sufficiently high rate of release cannot be obtained under a climatic condition of low temperatures as in early spring, when most of the first-generation pest insects develop. When the barrier performance of the polymer film is decreased by using a polymer film of a decreased thickness or by using a polyolefin of a low crystallinity in order to ensure high releasability of the pheromone, on the other hand, a problem is caused that not only the rate of pheromone release is too high when the ambient temperature is high as in summer but also the liquid pheromone infiltrates the walls of the dispenser so as to increase the unavailable portion of the pheromone contained in the dispenser. When the pheromone dispenser is prepared such that the rate of pheromone release is appropriate at high temperatures of summer, on the other hand, the rate of pheromone release would be too low at low temperatures or, in particular, at the initial stage of use so that the object of pest elimination cannot be fully achieved.

When the pheromone compound is an aldehyde, acetate, ketone, hydrocarbon or alcohol of 10 to 22 carbon atoms in a molecule having aliphatic unsaturation, as is the case of most of the pheromone compounds of the insects belonging to the order of *Lepidoptera*, the pheromone compound infiltrating the walls of the dispenser and retained there is subject to denaturation by the reaction of polymerization, oxidation, bond cleavage and the like. This problem can of course be solved by enhancing the barrier performance of the dispenser walls though at the sacrifice of the pheromone releasability not to ensure sufficiently high rate of pheromone release at low temperatures in early spring.

### SUMMARY OF THE INVENTION

The present invention accordingly has an object to provide a novel and improved method for the disruption of mating of pest insects by using a sex pheromone of the insects, in which the pheromone is prevented from denaturation by the reactions of polymerization, oxidation, bond cleavage and the like at high temperatures of summer still ensuring a sufficiently high rate of pheromone release even at low temperatures in early spring.

Thus, the method of the present invention for the disruption of mating of pest insects by using a dispenser containing a sex pheromone compound of the insects comprises the steps of:
(a) encapsulating a liquid sex pheromone compound of the insects in a container having walls made from a uniform film of a polyolefin resin at a low temperature to prepare a pheromone dispenser;
(b) keeping the pheromone dispenser at a temperature of 35°C or higher until the liquid sex pheromone compound infiltrates the wall of the container and the amount of the pheromone contained in the wall is at least 2% by weight based on the weight of the wall; and
(c) distributing a number of pheromone dispensers over a field in a season when temperature is low.

### DETAILED DESCRIPTION OF THE PREFERRED EMBODIMENTS

As is described above, the method of the present invention for the disruption of mating of pest insects by using a sex pheromone of the insects is performed by distributing a number of dispensers made from a uniform film of a polyolefin resin and filled with a liquid pheromone compound of the insects throughout the year beginning with early spring when the temperature is low through the summer when the temperature is high. Characteristically, in the inventive method, the pheromone dispensers prepared in a cold season are distributed over the field not as prepared but after a pre-treatment in which the pheromone-containing dispensers are kept at a temperature of 35°C or higher until the liquid pheromone compound infiltrates the walls of the dispenser so that the polyolefin film of the dispenser walls contains a specified amount of the liquid pheromone.

The above described unique method of the present invention has been completed on the base of the following findings obtained by the extensive investigations undertaken by the inventors with an object to achieve the above mentioned object.
1) In a pheromone dispenser made from a container of a polyolefin resin filled with a liquid pheromone, the amount of the pheromone absorbed in the dispenser walls can be freely controlled by selecting the temperature and duration for the storage of the pheromone dispenser.
2) When pheromone dispensers, of which the walls contain the pheromone as absorbed therein beforehand, are distributed over the field, the rate of pheromone release can be high at the initial stage directly after distribution as compared with freshly prepared dispensers.
3) Diffusion of the pheromone molecules through the dispenser walls can be increased when the walls contain the pheromone absorbed in advance.
4) When preliminary absorption of the pheromone in the dispenser walls is effected at a temperature higher than the temperature which the dispensers may encounter in the field during practical use thereof, the dispenser walls absorb an excessively large amount of the pheromone so that the rate of pheromone release at the initial stage can be increased so much. This is because the behavior of pheromone release through the dispenser walls is greatly influenced, in particular, at low temperatures by the solubility of the pheromone in the walls and diffusion of pheromone molecules through the walls.
5) Assuming that dissolution of the pheromone molecules in the polymeric dispenser walls causes relaxation of the polymeric molecular chains to an extent depending on the temperature so that the interstices of the thus relaxed molecular chains are filled with the pheromone molecules to determine the swelling ratio, the velocity at which the once relaxed molecular chain structure regains the unrelaxed state by losing the pheromone molecules is extremely low as compared with the velocity at which the unrelaxed molecular chain structure becomes relaxed by absorbing the pheromone molecules.
6) Assuming that the swelling ratios are the same, fluctuation of the pheromone molecules and the polymeric molecular chains is larger at higher temperatures than at lower temperatures so that the molecular chain structure is in the more highly relaxed state at higher temperatures.

Further continued investigations conducted by the inventors on the base of the above described findings have led to a discovery that the working efficiency of a pheromone dispenser made from a film of a polyolefin resin can remarkably be improved when the dispenser filled with a liquid pheromone is subjected, prior to distribution over the field, to a pre-treatment for absorption of the liquid pheromone by the dispenser walls at a temperature substantially higher than the temperature which the dispensers may encounter in the field to such an extent that the polymeric dispenser walls contain the pheromone in an amount of at least 2% by weight based on the weight of the walls resulting in completion of the present invention.

The polyolefin-made container of the pheromone dispenser used in the inventive method can be in the form of a capillary tube, ampule, hollow sphere and the like having a uniform wall thickness shaped by a conventional molding method such as blow molding, two-stage drawing, extrusion molding, compression molding and the like. The wall thickness thereof, which greatly influences the rate of pheromone release, is preferably in the range from 0.2 to 2 mm. When the wall thickness is too small, the permeation velocity of the liquid pheromone through the wall is too large to destroy the balance between infiltration of the pheromone from the inner surface of the wall and the vaporization loss of the pheromone from the outer surface thereof so that a liquid film is formed on the outer surface similarly to the phenomenon of bleeding. When the thickness is too large, on the other hand, the rate of pheromone release would be so low that the working efficiency of the dispenser would be insufficiently low especially at low temperatures.

Various kinds of polyolefin resins can be used as the material of the dispenser walls including polyethylenes, polypropylenes and polypentenes as well as copolymeric resins of these monomers and another ethylenically unsaturated monomer. Examples of particularly preferable polyolefin resins include polyethylenes and copolymeric resins of ethylene and vinyl acetate in consideration of the molecular weight and molecular polarity of the pheromone compounds.

Following is a description of the pre-treatment for the preliminary absorption of the pheromone in the dispenser walls. Although polyolefin resins as a material of the dispenser walls are generally insoluble in liquid pheromone compounds, the resins can absorb and retain the pheromone compound in an amount of a few % to several tens of % by weight. The understanding heretofore is that the polyolefin resin as the material of the pheromone dispenser walls should be swollen with the liquid pheromone with an equilibrium swelling ratio of 2 to 6% by weight at 20°C but it is natural that the optimum swelling ratio depends on various factors such as the kind of the polyolefin resin, kind of the pheromone compound, temperature at which the dispensers are used and so on. For example, a decrease in the crystallinity of the polyolefin resin is a factor to increase the equilibrium swelling ratio. Even with the same swelling ratio, the degree of the molecular chain relaxation in the polyolefin film forming the dispenser walls depends on the temperature and it is presumable that the molecular chain structure is in a more strongly relaxed state at a higher temperature due to the increased Brownian movement of the pheromone molecules and the polymeric molecular chains. This fact leads to a conclusion that a polyolefin film having been subjected to the pre-treatment for the preliminary absorption of the pheromone at a higher temperature would return to the equilibrium state of the molecular chain structure corresponding to the ambient temperature for use of the dispenser at a lower rate than that after the pre-treatment at a lower temperature even when the swelling ratios are the same to sustainedly exhibit a higher rate of pheromone release at the initial stage of use of the dispenser. Accordingly, a pheromone dispenser which should be used throughout the year beginning with early spring is subjected to the pre-treatment preferably at a temperature higher than the temperature encountered in the field during use of the dispensers.

The amount of pheromone absorption in the dispenser walls of a polyolefin resin can be freely controlled in the pre-treatment by keeping a pheromone-filled dispenser at a constant temperature for an appropriate length of time selected in consideration of the nature of the polyolefin resin and the pheromone compound.

As a particular example, it is preferable that, in a sustained-release pheromone dispenser for a pheromone which is an alcoholic compound contained in a container of a copolymeric resin of ethylene and vinyl acetate, the weight fraction of the vinyl acetate moiety in the copolymeric resin is in the range from 1 to 5%. When this weight fraction is too large, the copolymeric resin has excessively high affinity with the pheromone compound so that the resin film has an unduly high swelling ratio with the pheromone and degradation of the dispenser walls may take place by bleeding of the pheromone at high temperatures. When the weight fraction of the vinyl acetate moiety in the copolymeric resin is too small, the rate of pheromone release from the dispenser walls is limited even by the pre-treatment of the pheromone in the resin film although the dispenser walls are more resistant against degradation by the absorbed pheromone compound.

Assuming that the desirable amount of a pheromone absorbed in the dispenser walls made from a copolymeric resin of ethylene and vinyl acetate, of which the content of the vinyl acetate moiety is C% by weight,is S% by weight based on the weight of the dispenser walls, it is preferable that the value of (S × C) is in the range from 3 to 50. This means that, when the content of the vinyl acetate moiety in the copolymeric resin is relatively high, the rate of pheromone release can be high enough so that the amount of the pheromone absorbed in the dispenser walls by the pre-treatment can be relatively small to give a sufficiently large rate of pheromone release at low temperatures while, when the content of the vinyl acetate moiety in the copolymeric resin is low, the amount of the pheromone absorbed in the dispenser walls by the pre-treatment must be large in order to ensure a sufficiently high rate of pheromone release at low temperatures although the use of such a dispenser wall prevents excessively high rate of pheromone release at high temperature and degradation of the dispenser walls by bleeding of the pheromone on the dispenser walls.

As is stated before, the factors having a large influence on the rate of pheromone release include the average wall thickness and the content of the vinyl acetate moiety in the copolymeric resin of ethylene and vinyl acetate. Giving the wall thickness T in mm and the content of the vinyl acetate moiety C in % by weight, it is preferable that the value of (T × C) is in the range from 1 to 5. This means that, in order to have the pheromone absorbed in the dispenser walls in an appropriate amount to obtain an effective rate of pheromone release, the volume or, hence, the thickness of the dispenser walls can be small when the content of the vinyl acetate moiety is high in the copolymeric resin so as to increase the swelling ratio of the resin film while, when the content of the vinyl acetate moiety is low to give a low swelling ratio of the dispenser walls with the pheromone, the volume or thickness of the dispenser walls must be increased.

In the following, the method of the invention is described in more detail by way of examples and comparative examples.

### Example 1.

A capillary tube of high-density polyethylene having an inner diameter of 1.17 mm, wall thickness of 0.55 mm, length of 200 mm and weight of 570 mg was filled with 175 mg of Z-8-dodecenyl acetate, which is known as the sex pheromone of Oriental fruit moth (*Grapholito molesta*) of the order of *Lepidoptera*, and both of the tube ends were sealed to give a pheromone dispenser. The liquid column contained in the capillary tube had a length of 195 mm. The dispenser was sealed in a bag of aluminum foil and kept at 40 °C for 14 days so that the length of the liquid column in the capillary tube was decreased to 155 mm although absolutely no change was noted in the total weight of the dispenser tube. This meant that 36 mg of the pheromone had been absorbed in the tube wall corresponding to 6.3% by weight of pheromone absorption based on the weight of the capillarly tube.

A number of pheromone dispensers prepared in the above described manner and after the pre-treatment for the preliminary absorption of the pheromone in the dispenser walls were distributed within an apple orchard in Japan in early March and the weight thereof was periodically measured until the end of September to calculate the amount of the pheromone in mg released per day per dispenser for each month. The results are shown in Table 1 below.

### Comparative Example 1.

For comparison, the same test as above was concurrently undertaken except that the pre-treatment of the pheromone-filled dispenser tubes was omitted and the dispensers as prepared were distributed in the same apple orchard. The results are shown also in Table 1 in mg per day per dispenser for each month. As is understood from Table 1, the rate of pheromone release in this comparative example was noticeably lower than in Example 1, in particular, in the beginning stage of the test in March to April when the temperature was low.

**Table 1**

| Month | Mar. | Apr. | May | Jun. | Jul. | Aug. | Sept. |
|---|---|---|---|---|---|---|---|
| Example 1 | 0.8 | 0.8 | 0.9 | 0.9 | 1.1 | 1.1 | 0.8 |
| Comparative Example 1 | 0.3 | 0.4 | 0.7 | 0.8 | 1.0 | 1.0 | 0.8 |
| Average temperature, °C | 14 | 16 | 18 | 19 | 22 | 23 | 16 |

### Example 2.

A capillary tube of a copolymeric resin of ethylene and vinyl acetate, of which the content of the vinyl acetate moiety was 4% by weight, having an inner diameter of 1.22 mm, wall thickness of 0.55 mm, length of 200 mm and weight of 580 mg was filled with 175 mg of E-8,E-10-dodecadienol, which is known as the sex pheromone of codring moth (*Cydia domonell*a) and both of the tube ends were sealed to give a pheromone dispenser. The length of the liquid column enclosed in the capillary tube was 195 mm.

The pheromone-filled dispenser was sealed in a bag of aluminum foil and kept at 40°C for 3 days so that the length of the liquid column in the capillary tube was decreased to 150 mm although absolutely no change was noted in the total weight of the dispenser tube indicating that 40.4 mg of the pheromone compound had been absorbed in the dispenser walls and the content of the pheromone absorbed in the capillary wall was 7% by weight based on the weight of the capillary tube.

The pheromone dispensers prepared in the above described manner and after the pre-treatment for the pheromone absorption were distributed on October 1st in a pear orchard of Australia and the weight thereof was periodically measured until the end of February of the next year to calculate the rate of pheromone release in mg per day per dispenser for each month. The results are shown in Table 2.

The results in Table 2 show that the rate of pheromone release was sufficiently high even at the low temperature of October and the rate could be controlled adequately even at high temperatures of January to February without wetness of the outer surface of the dispensers by the bleeding of the pheromone to give a relatively uniform rate of pheromone release over the whole period of test.

### Comparative Example 2.

The procedure of the test was just the same as in Example 2 excepting omission of the pre-treatment of the pheromone-filled dispensers for the preliminary absorption of the pheromone. The results of the test are shown also in Table 2, from which it is understood that the rate of pheromone release was insufficiently low at low temperatures in early spring of October to November.

### Comparative Example 3.

The procedure of the test was just the same as in Example 2 except that the resin forming the capillary tubes of the dispensers was a copolymeric resin of ethylene and vinyl acetate of which the content of the vinyl acetate moiety was 12% by weight instead of 4% by weight and the pre-treatment of the pheromone-filled dispensers for the preliminary absorption of the pheromone was omitted. The results of the test are shown also in Table 2.

As is understood from Table 2, a sufficiently high rate of pheromone release could be obtained at low temperatures in early spring but the rate of pheromone release was excessively increased as the temperature increased in summer to cause a futile loss of the pheromone from the dispensers. In addition, the surface of the dispensers was wet and sticky due to bleeding of the pheromone to cause heavy deposition of dust particles thereon which was presumably the reason for the undue decrease in the rate of pheromone release in the succeeding period of January to February.

**Table 2**

| Month | Oct. | Nov. | Dec. | Jan. | Feb. |
|---|---|---|---|---|---|
| Example 2 | 0.7 | 0.7 | 0.8 | 1.0 | 1.0 |
| Comparative Example 2 | 0.3 | 0.4 | 0.6 | 0.8 | 0.8 |
| Comparative Example 3 | 0.8 | 1.1 | 1.8 | 0.6 | 0.1 |
| Average temperature,°C | 14 | 17 | 20 | 23 | 24 |

### Example 3.

An ampule of a copolymeric resin of ethylene and vinyl acetate, of which the content of the vinyl acetate moiety was 3% by weight, having an inner volume of 5 ml, average wall thickness of 0.8 mm and weight of 1.7 g was charged with 300 mg of E-11-tetradecenol, which is known as the sex pheromone of variegated leaf roller to prepare a pheromone-filled dispenser. One hundred ampules prepared in the above described manner were each sealed in a bag of aluminum foil and kept at 40 °C for 7 days to have the pheromone absorbed in the ampule walls. Absolutely no change was noted in the weight of the ampules by this pre-treatment. Three of the ampules were taken and the pheromone contained therein was discharged followed by three times repeated washing of the inner walls of the ampules each time with 5 ml of ether. After evaporation of the ether, the weight of the empty ampules was measured to find that the weight increase of the ampules was 50 mg per ampule on an average of the three corresponding to 2.9% by weight of the content of the pheromone absorbed in the ampule walls.

These pheromone dispensers were distributed over a 3 hectares wide apple orchard in the United States on April 12th in a distribution density of 300 dispensers per hectare to test the efficiency for the elimination of variegated leaf rollers. The results were that the mating disruption by the pheromone traps was at least 95% during the period of three months starting in April. The proportion of damaged fruits was 0.3% in the test area with distribution of the pheromone dispensers while the proportion was 2% in the control area without distribution of the pheromone dispensers.

## Claims

1. A method for the disruption of mating of pest insects by using a dispenser containing a sex pheromone compound of the insects which comprises the steps of:
(a) encapsulating a liquid sex pheromone compound of the insects in a container having walls made from a uniform film of a polyolefin-based resin at a low temperature to prepare a pheromone dispenser;
(b) keeping the pheromone dispenser at a temperature of 35°C or higher until the liquid sex pheromone compound infiltrates the wall of the container and the amount of the pheromone contained in the wall is at least 2% by weight based on the weight of the walls; and
(c) distributing a number of the pheromone dispensers over a field in a season when temperature is low.

2. The method as claimed in claim 1 in which the polyolefin-based resin is a copolymeric resin of ethylene and vinyl acetate.

3. The method as claimed in claim 2 in which the content of the vinyl acetate moiety in the copolymeric resin of ethylene and vinyl acetate is in the range from 1 to 5% by weight.

## Patentansprüche

1. Verfahren zur Verhinderung der Paarung von Schädlingsinsekten unter Einsatz eines eine Sexualpheromonverbindung dieser Insekten enthaltenden Spenders mit folgenden Stufen:
(a) Einkapsel einer flüssigen Sexualpheromonverbindung dieser Insekten in einem Behälter mit Wänden aus einem gleichmäßigen Film aus einem Harz auf Polyolefinbasis bei einer niedrigen Temperatur zur Herstellung eines Pheromonspenders,
(b) Halten des Pheromonspenders bei einer Temperatur von 35 °C oder höher, bis die flüssige Sexualpheromonverbindung die Behälterwand infiltriert und die in der Wand enthaltene Pheromonmenge mindestens 2 Gew.-%, bezogen auf das Gewicht der Wände, beträgt und
(c) Verteilen einer Zahl von Pheromonspendern über ein Feld zu einer Jahreszeit, bei der die Temperatur niedrig ist.

2. Verfahren nach Anspruch 1, bei dem das Harz auf Polyolefinbasis ein copolymeres Harz aus Ethylen und Vinylacetat ist.

3. Verfahren nach Anspruch 2, bei dem der Gehalt an Vinylacetateinheit in dem copolymeren Harz aus Ethylen und Vinylacetat 1 bis 5 Gew.-% beträgt.

## Revendications

1. Procéde d'interruption d'accouplement d'insectes nuisibles en utilisant un distributeur contenant un composé de phéromone sexuelle des insectes qui comprend les étapes consistant:
(a) à encapsuler un composé liquide de phéromone sexuelle des insectes dans un conteneur ayant des parois faites d'un film uniforme d'une résine à base de polyoléfine à basse température pour préparer un distributeur de phéromone;
(b) à garder le distributeur de phéromone à une température de 35°C ou plus jusqu'à ce que le composé liquide de phéromone sexuelle infiltre la paroi du conteneur et que la quantité de phéromone contenue dans la paroi soit d'au moins 2% en poids par rapport au poids des parois; et
(c) à répartir un certain nombre de distributeurs de phéromone dans un champ à une saison où la température est basse.

2. Procédé selon la revendication 1, dans lequel la résine à base de polyoléfine est une résine copolymère d'éthylène et d'acétate de vinyle.

3. Procédé selon la revendication 2, dans lequel la teneur en fraction acétate de vinyle dans la résine copolymère d'éthylène et d'acétate de vinyle est comprise entre 1 et 5% en poids.
